# EUROPEAN PATENT APPLICATION

(11) **EP 4 586 556 A1**
(43) Date of publication of application: **16.07.2025**
(21) Application number: 24151650.9
(22) Date of filing: 12.01.2024
(51) Int. Cl.: H04L 12/40

(54) **METHOD, DEVICE, SYSTEM AND COMPUTER PROGRAM FOR AUTOMATIC BAUD RATE DETECTION OF A CAN BUS**

(71) Applicant: Toyota Material Handling Manufacturing Sweden AB, 595 81 Mjölby (SE)
(72) Inventor: STRAND, Michael, 590 47 Vikingstad (SE); NÅBO, Daniel, 583 34 Linköping (SE)
(74) Representative: Zacco Sweden AB

(57) **Abstract**

A method (100) for automatic baud rate detection of a controller area network, CAN, bus. The method comprises determining (S200), at a first CAN node connected to the CAN bus, if the CAN bus is active; based on the CAN bus being active, determining (S300) a baud rate of the CAN bus based on a first message from the CAN bus; and based on the CAN bus not being active, determining (S400) a baud rate of the CAN bus based on a response triggered by a frame transmitted by the first CAN node, the first CAN node being configured to participate on the CAN bus at a baud rate selected from a set of predetermined baud rates.

## Description

### TECHNICAL FIELD

The present disclosure relates to automatic baud rate detection of a controller area network, CAN, bus.

### BACKGROUND ART

Service of material handling vehicles are often limited to trained personnel by requiring the material handling vehicle to enter a service mode, i.e. a dedicated operational mode relating to service of the material handling vehicle, such as diagnostics and configuration controls. In order to limit the service mode to trained personnel, the service mode may need to be unlocked, e.g. by a dedicated key. Depending on how the service mode is accessed, the trained personnel may have to spend an unwanted amount of time unlocking the vehicle and/or possibly inadvertently affecting the current configuration of the material handling vehicle during the service mode access process.

Thus, there is a need in the art to facilitate service of material handling vehicles.

### SUMMARY OF THE INVENTION

The present disclosure relates to a method for automatic baud rate detection of a controller area network, CAN, bus. The method comprises determining, at a first CAN node connected to the CAN bus, if the CAN bus is active. The method further comprises, based on the CAN bus being active, determining a baud rate of the CAN bus based on a first message from the CAN bus. The method also comprises, based on the CAN bus not being active, determining a baud rate of the CAN bus based on a response triggered by a frame transmitted by the first CAN node, the first CAN node being configured to participate on the CAN bus at a baud rate selected from a set of predetermined baud rates.

The need to know the baud rate for a machine or device in advance can thereby be eliminated, along with the need to carry multiple different single baud rate devices, e.g. for unlocking a machine having a CAN bus operating at one of the corresponding baud rates. The disclosed method further eliminates risks associated with messages overloading the CAN bus if an incorrect baud rate is attempted. A further technical effect and advantage is that the disclosed method is able to find the baud rate for a CAN bus that is quiet by triggering responses.

According to some aspects, determining the baud rate of the CAN bus based on the set of responses comprises repeating a second baud rate detection sequence until a second criterion is met, the second criterion comprising the first baud rate matching the baud rate of the CAN bus or no baud rate from the set of predetermined baud rates matching the baud rate of the CAN bus. The second baud rate detection sequence comprises triggering transmission of the first message, determining if the first baud rate matches the baud rate of the CAN bus based on the transmitted first message, and, based on the first baud rate not matching the baud rate of the CAN bus, triggering a second baud rate update sequence, S2U, the second baud rate update sequence being configured to, based on there being at least one baud rate left to try, setting the first baud rate to one of the predetermined baud rates left to try.

By iterating the second baud rate detection sequence, the method actively tests if a baud rate of the predetermined set of baud rates matches the CAN bus baud rate, and enabling triggering an error message if no match can be found.

According to some aspects, triggering transmission of the first message further comprises configuring the first CAN node to participate on the CAN bus, transmitting, from the first CAN node to the CAN bus, a CAN frame at the first baud rate, and receiving, at the first CAN node, the first message.

According to some aspects, the first CAN node is configured to initially operate in a mode configured to only receive messages, such as a "Listen-Only" mode. If the CAN bus is silent, the baud rate cannot be determined in such a mode. Thus, by configuring the first CAN node to participate on the CAN bus, baud rate determination becomes possible by transmitting messages and listening to the responses.

According to some aspects, the second baud rate update sequence, S2U, is further configured to determining if there are any baud rates left to try from the set of predetermined baud rates, based on there being no baud rates left to try, triggering an indication configured to indicate that the baud rate of the CAN bus does not match any of the baud rates in the set of predetermined baud rates, aborting any pending CAN frames, and disabling the CAN controller of the first CAN node.

By aborting any pending CAN frames and disabling the CAN controller of the first CAN node, the CAN bus is protected from being overloaded by messages relating to a baud rate mismatch between the first CAN node and the CAN bus. The indication that none of the baud rates in the set of predetermined baud rates informs the user that (s)he needs to try again with a different set of predetermined baud rates.

According to some aspects, determining a baud rate of the CAN bus based on the first message from the CAN bus further comprises determining if the first baud rate matches the baud rate of the CAN bus based on the first message; based on the first baud rate matching the baud rate of the CAN bus, configuring the first CAN node to participate on the CAN bus, and, based on the first baud rate not matching the baud rate of the CAN bus, triggering a first baud rate update sequence, S1U, the first baud rate update sequence being configured to, based on there being at least one baud rate left to try, setting the first baud rate to one of the baud rates left to try.

This switches the first CAN node from a "Listen-Only" state (if needed) to be able to transmit messages when it is established that the CAN bus baud rate has been found, and tries another baud rate if the current baud rate of the first CAN node does not match the baud rate of the CAN bus.

According to some aspects, the first baud rate update sequence, S1U, is further configured to determining if there are any baud rates left to try from the set of predetermined baud rates; based on there being no baud rates left to try, triggering an indication configured to indicate that the baud rate of the CAN bus does not match any of the baud rates in the set of predetermined baud rates, and receiving a new first message from the CAN bus.

Repeatedly passive listening at different baud rates for an (active) CAN bus is thereby enabled, with an indication being triggered if no matching baud rates are found, either because the CAN bus is really silent or the baud rate of the first CAN node does not match the baud rate of the CAN bus.

According to some aspects, determining a baud rate of the CAN bus further comprises, based on the first baud rate matching the baud rate of the CAN bus, transmitting a data payload to the CAN bus. According to some aspects, the CAN bus is a CAN bus of a material handling vehicle, MHV, and wherein the data payload is configured to trigger the MHV to enter a predetermined operational mode.

Transmitting a data payload enables interacting with the system in which the CAN bus operates. In particular, the data payload may trigger an MHV enter a predetermined operational mode in the form of a service mode. The method thereby enables a single device configured to implement the method to act as a service key for different material handling vehicles using different CAN bus baud rates.

According to some aspects, determining a baud rate of the CAN bus further comprises, based on the first baud rate matching the baud rate of the CAN bus, repeatedly transmitting, at a predetermined frequency, a control signal configured to indicate that the first CAN node is connected to the CAN bus, and exiting the predetermined operational mode based on said repeatedly transmitted control signal not being received by the MHV over a predetermined time interval.

The CAN bus can thereby detect if the first CAN node has been disconnected and the MHV can thereby exit the predetermined operational mode.

According to some aspects, determining a baud rate of the CAN bus further comprises, based on the first baud rate matching the baud rate of the CAN bus, establishing, via the first CAN node, a communication link between the CAN bus and a device external to the controller area network of the CAN bus.

This enables the external device to communicate directly to the system comprising the CAN bus, such as a material handling vehicle. For instance, the external device can thereby be used to upgrade software of the MHV.

According to some aspects, the set of predetermined baud rates comprises a set of multiples of 125 kilobits per second, Kbps, preferably at least 125 Kbps, 250 Kbps, 500 Kbps, and 1000 Kbps.

The set of predetermined rates are thereby adapted to match a standard of material handling vehicles and ensures that the method to be future-proof to CAN bus baud rate upgrades matching the predetermined baud rate multiples.

According to some aspects, the method further comprises receiving a set of identifiers from the CAN bus, accepting each received identifier, setting a first baud rate for the first CAN node, the first baud rate being a baud rate from the set of predetermined baud rates, configuring the first CAN node to only receive messages from the CAN bus, and configuring the first CAN node to wait for a message from the CAN bus within a predetermined time period.

This establishes a connection between the first CAN node and the CAN bus, with the first CAN node starting off in a "Listen-Only"-mode.

According to some aspects, the method further comprises connecting the first CAN node to the CAN bus via a connector, powering up the first CAN node based on electric power provided by the connector, and triggering the first CAN node to automatically execute the method according to any of the disclosed aspects, i.e. claims 1-11, upon powering up.

This ensures that the method is executed automatically.

The present disclosure further relates to a device for automatic baud rate detection of a controller area network, CAN, bus, the device comprising a first CAN bus interface, the first CAN bus interface being configured to connect the device to a CAN bus, preferably of a material handling vehicle, and control circuitry configured to execute the method according to any of claims 1-12 when connected to a CAN bus via the first CAN bus interface.

The device has all the technical effects and advantages of the disclosed method, as discussed above and below. In particular, it enables the use of a single service key for a set of material handling vehicles having CAN busses operating at different baud rates without the need to know the baud rate of the MHVs in advance.

According to some aspects, the device further comprises a second interface configured to enable communication with nodes connected to the CAN bus and an external device connected to the device via the second interface.

The device can thereby act as an interface between the external device and the system comprising the CAN bus, such as an MHV. According to some aspects, the second interface comprises a universal serial bus, USB, port. This enables the device to act as an interface between a computer and the MHV.

The present disclosure also relates to a computer program for automatic baud rate detection of a controller area network, CAN, bus, the computer program comprising computer program code which, when executed by the control circuitry of a device according to claim 13 when the first CAN bus interface is connected to a CAN bus, causes the device the execute the method according to any of claims 1-12.

The computer program implements the disclosed method and has all the associated technical effects and advantages.

The present disclosure additionally relates to a system for automatic baud rate detection of a controller area network, CAN, bus, the system comprising a device according to claim 13, and a material handling vehicle, MHV. The MHV comprises the CAN bus and a second CAN bus interface, the second CAN bus interface being configured to connect the device to the CAN bus via the first CAN bus interface of the device. According to some aspects, the MHV is configured to enter a service mode upon receiving, via the CAN bus, a data payload configured to trigger the MHV to enter the service mode, and wherein the device is further configured to transmit said data payload to the CAN bus.

This provides a system wherein a user, such as service personnel, can connect to the MHV with a single device and without having to know the baud rate used by the CAN bus of the MHV in advance, and have the MHV automatically enter a service mode.

### BRIEF DESCRIPTION OF THE DRAWINGS

Figures 1a-1d illustrate aspects of the method for automatic baud rate detection;
Figure 2 illustrates aspects of the device for automatic baud rate detection; and
Figure 3 illustrates aspects of the system for automatic baud rate detection.

### DETAILED DESCRIPTION

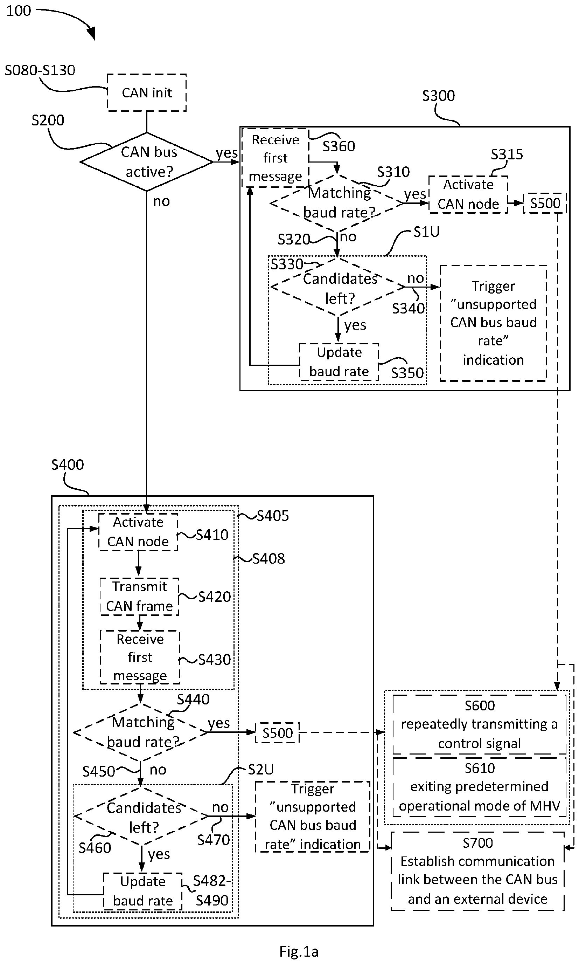

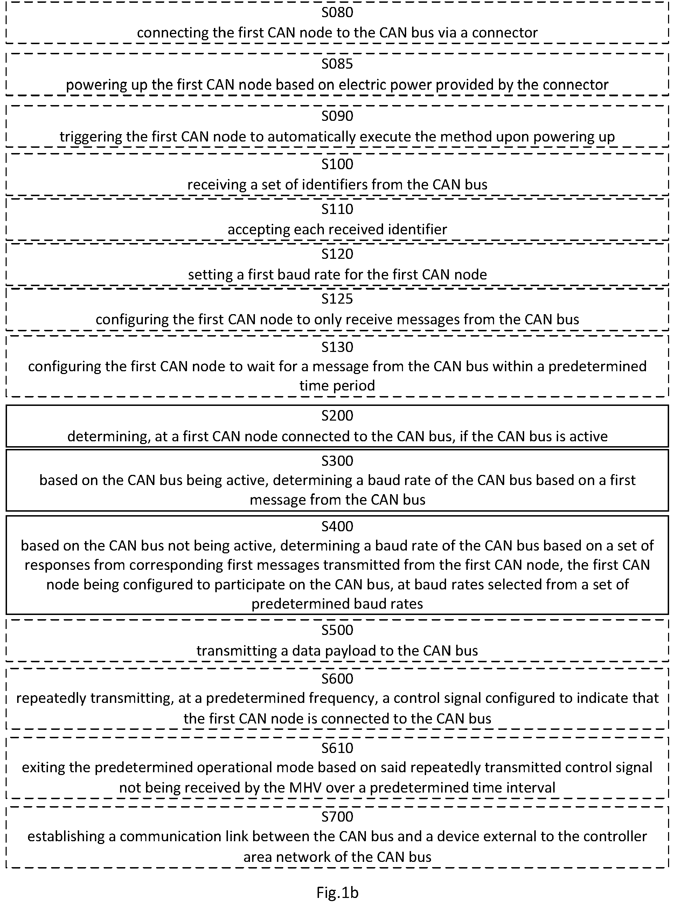

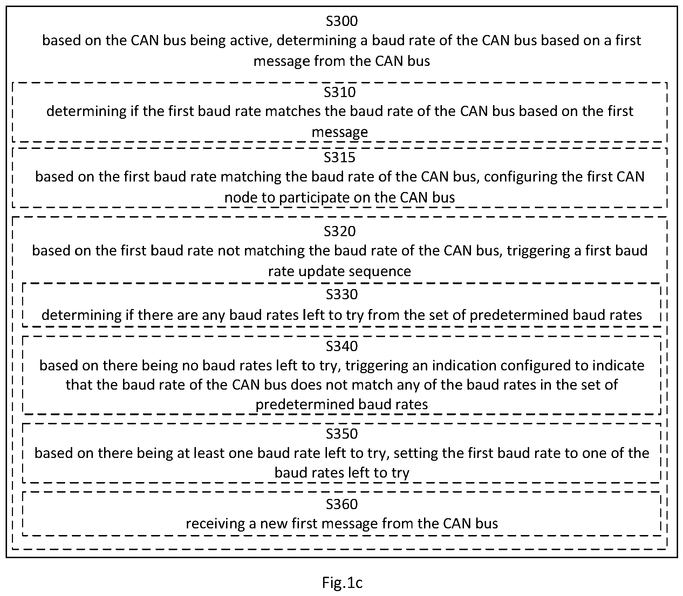

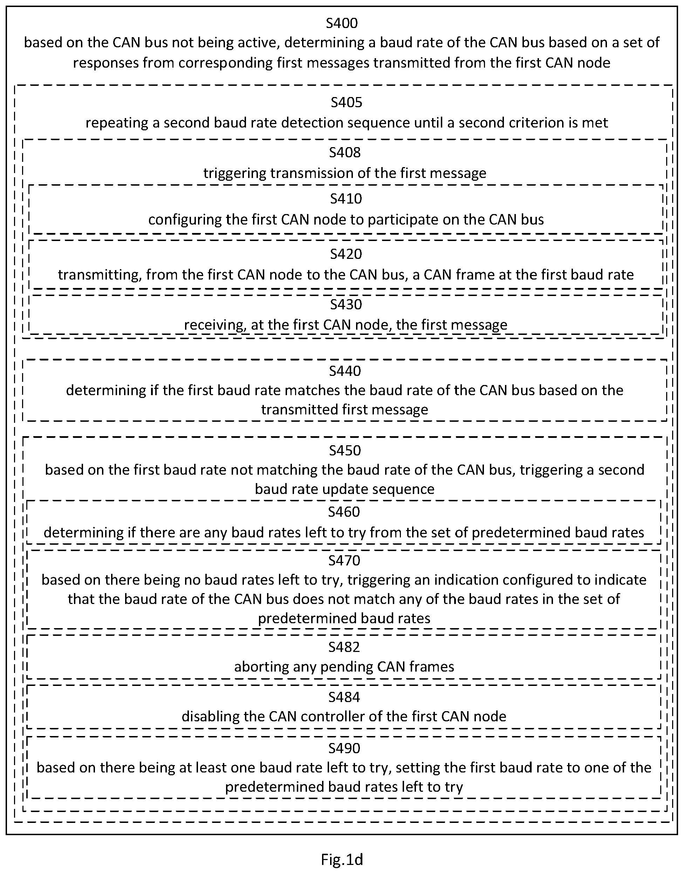

Figures 1a-1d illustrate aspects of a method 100 for automatic baud rate detection of a controller area network, CAN, bus. Figure 1a provides an overview of the method 100 and Figures 1b-1d provide detailed aspects of the method.

The main idea is to connect a first CAN node to the CAN bus and first listen to the CAN bus for messages, preferably with the first CAN node in a mode configured to only receive messages. If the CAN bus is active, the first CAN node will go through and test a set of predetermined baud rates to see if it one of them match the baud rate of the CAN bus. If there is a match, the mode of the first CAN node is changed to enable the first CAN node to participate on the CAN bus, i.e. able to transmit messages, if needed. In the context of material handling vehicles, MHVs, and the CAN bus baud rate having been found, the first CAN node can transmit a data payload causing the MHV to enter a service mode.

If the CAN bus is not active, which can be determined according to some aspects by listening for messages on the CAN bus within a predetermined time period and the first CAN node not receiving any messages, the method switches to an active listening method, wherein the first CAN node is enabled to participate on the CAN bus and transmits a frame, thereby triggering either an acknowledgement, ACK, or a bus error depending on whether the current baud rate of the first CAN node matches that of the CAN bus. By repeatedly transmitting on the CAN bus at different baud rates, the first CAN node will either find a matching baud rate or trigger a message that none the predetermined baud rates match the CAN bus.

Thus, disclosed is a method 100 for automatic baud rate detection of a controller area network, CAN, bus.

A CAN node comprises control circuitry, wherein the control circuitry comprises a microcontroller and a CAN controller. The microcontroller is communicatively connected to the CAN controller. According to some aspects, the CAN controller is integrated with the microcontroller. The CAN node further comprises a CAN transceiver communicatively connected to the CAN controller and configured to connect to a CAN bus. According to some preferred aspects, the control circuitry of the CAN node is configured to execute the disclosed method.

Since CAN nodes may not comprise a power source of their own, but rather rely on power provided by a connector, the connector being configured to facilitate connection of the first CAN node to the CAN bus, when the CAN node is connected to the CAN bus via the connector.

Thus, according to some aspects, the method 100 comprises connecting S080 the first CAN node to the CAN bus via a connector, powering up S085 the first CAN node based on electric power provided by the connector, and triggering S090 the first CAN node to automatically execute the method according to any of the disclosed aspects, as described above and below, upon powering up.

The method further comprises determining S200, at a first CAN node connected to the CAN bus, if the CAN bus is active.

As stated above, the method preferably starts listening for messages transmitted over the CAN bus to see if it is active before attempting active attempts at getting messages from the CAN bus. If no messages are received from the CAN bus within a predetermined time period, the CAN bus can be deemed not active.

Thus, according to some aspects, the method 100 further comprises receiving S100 a set of identifiers from the CAN bus. According to some aspects, the method 100 further comprises accepting S110 each received identifier.

According to some aspects, the method 100 further comprises setting S120 a first baud rate for the first CAN node, the first baud rate being a baud rate from the set of predetermined baud rates.

Setting the set of predetermined baud rates to a set of multiples of standard baud rates, the first CAN node and/or a device comprising the first CAN node can interface with multiple CAN busses operating at different baud rates, e.g. respective CAN busses of different material handling vehicles, MHVs. Setting the set of predetermined baud rates to a set of multiples of standard baud rates, the method becomes future-proof in that it is configured to handle baud rate upgrades matching multiples of standard baud rates. Thus, according to some aspects, the set of predetermined baud rates comprises a set of multiples of 125 kilobits per second, Kbps, preferably at least 125 Kbps, 250 Kbps, 500 Kbps, and 1000 Kbps.

According to some aspects, the method 100 further comprises configuring S125 the first CAN node to only receive messages from the CAN bus, and configuring S130 the first CAN node to wait for a message from the CAN bus within a predetermined time period.

The method further comprises, based on the CAN bus being active, determining S300 a baud rate of the CAN bus based on a first message from the CAN bus. The first message comprises either an acknowledgement, ACK, if the first baud rate matches the baud rate of the CAN bus, or a bus-error message if the first baud rate does not match the baud rate of the CAN bus.

If the first message indicates that the first baud rate matches the baud rate of the CAN bus, the objective of the method has been met and the first CAN bus needs to be configured to be able to transmit messages if it is set to a "Listen-Only" mode. Thus, according to some aspects, determining S300 a baud rate of the CAN bus based on the first message from the CAN bus further comprises determining S310 if the first baud rate matches the baud rate of the CAN bus based on the first message, and based on the first baud rate matching the baud rate of the CAN bus, configuring S315 the first CAN node to participate on the CAN bus.

If the first baud rate doesn't match the baud rate of the CAN bus, the method successively goes through and attempts baud rates from the set of predetermined set of baud rates. Either one of the remaining baud rates left to try will match the baud rate of the CAN bus and the first CAN node is configured S315 to participate on the CAN bus, as above, or there will be no match, which preferably triggers an indication that none of the baud rates of the set of predetermined baud rates is the same as that of the CAN bus baud rate. Thus, according to some aspects, determining S300 a baud rate of the CAN bus based on the first message from the CAN bus also comprises, based on the first baud rate not matching the baud rate of the CAN bus, triggering S320 a first baud rate update sequence, S1U, the first baud rate update sequence being configured to, based on there being at least one baud rate left to try, setting S350 the first baud rate to one of the baud rates left to try. According to some aspects, the first baud rate update sequence, S1U, is further configured to determining S330 if there are any baud rates left to try from the set of predetermined baud rates. According to some aspects, the S1U is also configured to, based on there being no baud rates left to try, triggering S340 an indication configured to indicate that the baud rate of the CAN bus does not match any of the baud rates in the set of predetermined baud rates. According to some aspects, the S1U is also configured to, based on there being baud rates left to try, receiving S360 a new first message from the CAN bus.

The method also comprises, based on the CAN bus not being active, determining S400 a baud rate of the CAN bus based on a response triggered by a frame transmitted by the first CAN node, the first CAN node being configured to participate on the CAN bus at a baud rate selected from a set of predetermined baud rates.

Just as in the case of the first CAN node passively listening on the CAN bus at the different predetermined baud rates, the active participation of the first CAN node proceed analogously by testing each of the predetermined baud rates until a match is found or there are no more baud rates left to try to match with the baud rate of the CAN bus.

Thus, according to some aspects, determining S400 the baud rate of the CAN bus based on the set of responses comprises repeating S405 a second baud rate detection sequence until a second criterion is met, the second criterion comprising the first baud rate matching the baud rate of the CAN bus or no baud rate from the set of predetermined baud rates matching the baud rate of the CAN bus. The second baud rate detection sequence comprises triggering S408 transmission of the first message and determining S440 if the first baud rate matches the baud rate of the CAN bus based on the transmitted first message. The second baud rate detection sequence further comprises, based on the first baud rate not matching the baud rate of the CAN bus, triggering S450 a second baud rate update sequence S2U, the second baud rate update sequence being configured to, based on there being at least one baud rate left to try, setting S490 the first baud rate to one of the predetermined baud rates left to try.

According to some aspects, triggering S408 transmission of the first message further comprises configuring S410 the first CAN node to participate on the CAN bus, transmitting S420, from the first CAN node to the CAN bus, a CAN frame at the first baud rate, and receiving S430, at the first CAN node, the first message.

The second baud rate update sequence presents a potential problem in that simply transmitting messages from the first CAN node to the CAN bus can result in the CAN bus being overloaded. If the first CAN node can transmit messages, i.e. it is not in "Listen-Only" mode, and the first baud rate differs from the CAN bus baud rate, the first CAN node will receive a bus error message for each transmitted message. The first CAN node will then transmit an Error Flag, which interferes with the traffic on the CAN bus, because other nodes on the CAN bus will detect the Error Flag and discard the current message and increase their error counters. There is a risk that message from the first CAN node, instead of receiving an ACK, results in an error frame that causes the incorrect transmission from the first CAN node to go on indefinitely, waiting for an ACK that never appears, resulting in the CAN bus being overloaded. In order to prevent this, the first CAN node looks for error flags of the first message and deactivates the first CAN node as soon as an error flag is detected, as well as aborting any pending CAN frames.

Thus, according to some aspects, the second baud rate update sequence, S2U, is further configured to determining S460 if there are any baud rates left to try from the set of predetermined baud rates, aborting S482 any pending CAN frames, disabling S484 the CAN controller of the first CAN node, and, based on there being no baud rates left to try, triggering S470 an indication configured to indicate that the baud rate of the CAN bus does not match any of the baud rates in the set of predetermined baud rates.

With the baud rate found and the first CAN node being configured to participate on the CAN bus, data payloads can be effectively delivered. In the context of material handling vehicles, MHVs, the first CAN node can be part of a service key and the data payload can be used to trigger an MHV to enter a service mode.

Thus, according to some aspects, determining S300, S400 a baud rate of the CAN bus further comprises based on the first baud rate matching the baud rate of the CAN bus, transmitting S500 a data payload to the CAN bus. According to some aspects, the CAN bus is a CAN bus of a material handling vehicle, MHV, and wherein the data payload is configured to trigger the MHV to enter a predetermined operational mode.

According to some aspects, determining S300, S400 a baud rate of the CAN bus further comprises based on the first baud rate matching the baud rate of the CAN bus, repeatedly transmitting S600, at a predetermined frequency, a control signal configured to indicate that the first CAN node is connected to the CAN bus, and exiting S610 the predetermined operational mode based on said repeatedly transmitted control signal not being received by the MHV over a predetermined time interval. This provides a mechanism to detect removal of the service key from the MHV and automatically exit the service mode.

According to some aspects, determining S300, S400 a baud rate of the CAN bus further comprises based on the first baud rate matching the baud rate of the CAN bus, establishing S700, via the first CAN node, a communication link between the CAN bus and a device external to the controller area network of the CAN bus. The method thereby extends the functionality of the first CAN node, or a device comprising the first CAN node, to function as an interface between the CAN bus and the external device, such as a computer.

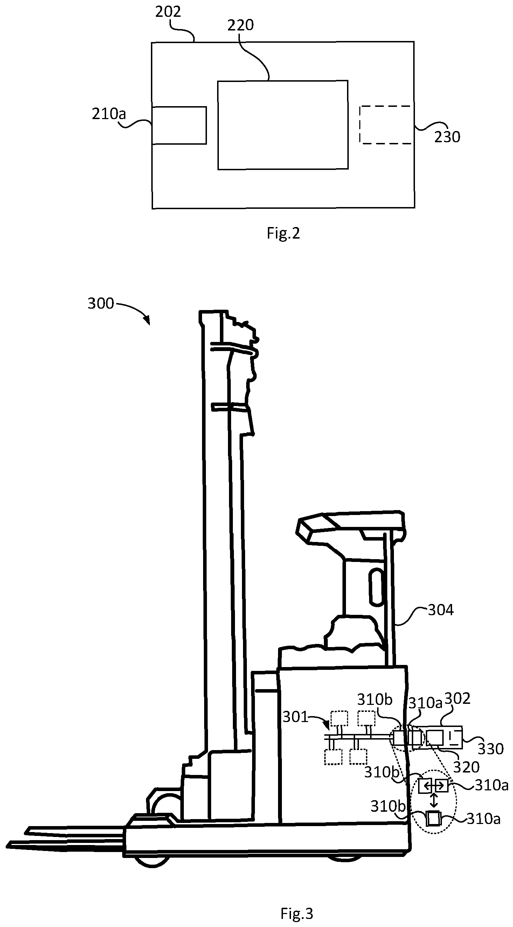

Figure 2 illustrates aspects of a device 202 for automatic baud rate detection of a controller area network, CAN, bus. The device 202 comprises a first CAN bus interface 210a, the first CAN bus interface 210a being configured to connect the device 202 to a CAN bus, preferably of a material handling vehicle, MHV. The device 202 further comprises control circuitry 220 configured to execute the method as described above and below when connected to a CAN bus via the first CAN bus interface 210a. The device 202 thereby allows a user to automatically determine the baud rate of a set of CAN busses operating at different baud rates, such as the respective CAN busses of a set of material handling vehicles, with a single device, even if the CAN busses are silent, i.e. have no messaging traffic when the device 202 is connected to the CAN bus. The user of the device does not need to know the baud rates of the MHVs in advance and can access all of them via a single device 202.

The device 202 can be extended to be used as an interface between the CAN bus and a device external to the CAN bus by adding a second interface 230, such as a universal serial bus, USB. Thus, according to some aspects, the device 202 further comprises a second interface 230 configured to enable communication with nodes connected to the CAN bus and an external device connected to the device 202 via the second interface 230. Running diagnostics and/or updating software of system components connected directly or indirectly to the CAN bus is thereby enabled. This also reduces the amount of computational circuitry needed at the device 202 to perform diagnostics and/or software updates.

Figure 3 illustrates aspects of a system 300 for automatic baud rate detection of a controller area network, CAN, bus 301. The system 300 comprises a device 302 for automatic baud rate detection of a CAN bus as described above and below, and a material handling vehicle 304, MHV. The MHV 304 comprises the CAN bus 301 and a second CAN bus interface 310b. The second CAN bus interface 310b being configured to connect the device 302 to the CAN bus 301 via the first CAN bus interface 310a of the device 302. According to some aspects, the second CAN bus interface 310b comprises a connector configured to provide electric power to the first CAN node of the device 302, when the first CAN node is connected to the CAN bus via the connector. The inset figure illustrates the device 302 being connected to and removed from the CAN bus of the MHV via the CAN bus interfaces 310a, 310b. According to some aspects, the MHV 304 is configured to enter a service mode upon receiving, via the CAN bus 301, a data payload configured to trigger the MHV to enter the service mode, and wherein the device 302 is further configured to transmit said data payload to the CAN bus 301. According to some aspects, the CAN bus 301 of the MHV 304 is configured to operate at a baud rate that is a multiple of 125 kilobits per second, Kbps, and the set of predetermined baud rates of method implemented by device 302 comprises a set of multiples of 125 Kbps, preferably at least 125 Kbps, 250 Kbps, 500 Kbps, and 1000 Kbps.

The system 300 thereby implements aspects of the disclosed method by means of the device 302, with all the associated technical effects and advantages.

The present disclosure also relates to a computer program for automatic baud rate detection of a controller area network, CAN, bus. The computer program comprises computer program code which, when executed by the control circuitry 220, 320 of a device 202, 302 for automatic baud rate detection of a CAN bus, as described above and below, when the first CAN bus interface 210a, 310a is connected to a CAN bus, causes the device 202, 302 the execute the method 100 for automatic baud rate detection of a CAN bus, as described above and below.

## Claims

1. A method (100) for automatic baud rate detection of a controller area network, CAN, bus, the method comprising
- determining (S200), at a first CAN node connected to the CAN bus, if the CAN bus is active,
- based on the CAN bus being active, determining (S300) a baud rate of the CAN bus based on a first message from the CAN bus, and
- based on the CAN bus not being active, determining (S400) a baud rate of the CAN bus based on a response triggered by a frame transmitted by the first CAN node, the first CAN node being configured to participate on the CAN bus at a baud rate selected from a set of predetermined baud rates.

2. The method (100) according to claim 1, wherein determining (S400) the baud rate of the CAN bus based on the set of responses comprises repeating (S405) a second baud rate detection sequence until a second criterion is met, the second criterion comprising the first baud rate matching the baud rate of the CAN bus or no baud rate from the set of predetermined baud rates matching the baud rate of the CAN bus, the second baud rate detection sequence comprising
- triggering (S408) transmission of the first message,
- determining (S440) if the first baud rate matches the baud rate of the CAN bus based on the transmitted first message, and
- based on the first baud rate not matching the baud rate of the CAN bus, triggering (S450) a second baud rate update sequence (S2U), the second baud rate update sequence being configured to, based on there being at least one baud rate left to try, setting (S490) the first baud rate to one of the predetermined baud rates left to try.

3. The method (100) according to claim 2, wherein triggering (S408) transmission of the first message further comprises
- configuring (S410) the first CAN node to participate on the CAN bus,
- transmitting (S420), from the first CAN node to the CAN bus, a CAN frame at the first baud rate, and
- receiving (S430), at the first CAN node, the first message.

4. The method (100) according to claim 2 or 3, wherein the second baud rate update sequence (S2U) is further configured to
- determining (S460) if there are any baud rates left to try from the set of predetermined baud rates,
- based on there being no baud rates left to try, triggering (S470) an indication configured to indicate that the baud rate of the CAN bus does not match any of the baud rates in the set of predetermined baud rates,
- aborting (S482) any pending CAN frames, and
- disabling (S484) the CAN controller of the first CAN node.

5. The method (100) according to any of the previous claims, wherein determining (S300) a baud rate of the CAN bus based on the first message from the CAN bus further comprises
- determining (S310) if the first baud rate matches the baud rate of the CAN bus based on the first message,
- based on the first baud rate matching the baud rate of the CAN bus, configuring (S315) the first CAN node to participate on the CAN bus, and
- based on the first baud rate not matching the baud rate of the CAN bus, triggering (S320) a first baud rate update sequence (S1U), the first baud rate update sequence being configured to, based on there being at least one baud rate left to try, setting (S350) the first baud rate to one of the baud rates left to try.

6. The method (100) according to claim 5, wherein the first baud rate update sequence (S1U) is further configured to
- determining (S330) if there are any baud rates left to try from the set of predetermined baud rates,
- based on there being no baud rates left to try, triggering (S340) an indication configured to indicate that the baud rate of the CAN bus does not match any of the baud rates in the set of predetermined baud rates, and
- receiving (S360) a new first message from the CAN bus.

7. The method (100) according to any of the preceding claims, wherein determining (S300, S400) a baud rate of the CAN bus further comprises
- based on the first baud rate matching the baud rate of the CAN bus, transmitting (S500) a data payload to the CAN bus.

8. The method (100) according to claim 7, wherein the CAN bus is a CAN bus of a material handling vehicle, MHV, and wherein the data payload is configured to trigger the MHV to enter a predetermined operational mode,
preferably the determining (S300, S400) a baud rate of the CAN bus further comprises
- based on the first baud rate matching the baud rate of the CAN bus, repeatedly transmitting (S600), at a predetermined frequency, a control signal configured to indicate that the first CAN node is connected to the CAN bus, and
- exiting (S610) the predetermined operational mode based on said repeatedly transmitted control signal not being received by the MHV over a predetermined time interval.

9. The method (100) according to any of the preceding claims, wherein determining (S300, S400) a baud rate of the CAN bus further comprises
- based on the first baud rate matching the baud rate of the CAN bus, establishing (S700), via the first CAN node, a communication link between the CAN bus and a device external to the controller area network of the CAN bus.

10. The method (100) according to any of the preceding claims, wherein the set of predetermined baud rates comprises a set of multiples of 125 kilobits per second, Kbps, preferably at least 125 Kbps, 250 Kbps, 500 Kbps, and 1000 Kbps.

11. The method (100) according to any of the preceding claims, further comprising
- receiving (S100) a set of identifiers from the CAN bus,
- accepting (S110) each received identifier,
- setting (S120) a first baud rate for the first CAN node, the first baud rate being a baud rate from the set of predetermined baud rates,
- configuring (S125) the first CAN node to only receive messages from the CAN bus, and
- configuring (S130) the first CAN node to wait for a message from the CAN bus within a predetermined time period.

12. The method (100) according to any of the preceding claims, further comprising
- connecting (S080) the first CAN node to the CAN bus via a connector,
- powering up (S085) the first CAN node based on electric power provided by the connector, and
- triggering (S090) the first CAN node to automatically execute the method according to any of claims 1-11 upon powering up.

13. A device (202) for automatic baud rate detection of a controller area network, CAN, bus, the device comprising
- a first CAN bus interface (210a), the first CAN bus interface (210a) being configured to connect the device (202) to a CAN bus, preferably of a material handling vehicle, and
- control circuitry (220) configured to execute the method according to any of claims 1-12 when connected to a CAN bus via the first CAN bus interface (210a),
- preferably the device (202) is further comprising a second interface (230) configured to enable communication with nodes connected to the CAN bus and preferably an external device connected to the device (202) via the second interface (230).

14. A computer program for automatic baud rate detection of a controller area network, CAN, bus, the computer program comprising computer program code which, when executed by the control circuitry (220, 320) of a device (202, 302) according to claim 13 when the first CAN bus interface (210a, 310a) is connected to a CAN bus, causes the device (202, 302) the execute the method according to any of claims 1-12.

15. A system (300) for automatic baud rate detection of a controller area network, CAN, bus (301), the system (300) comprising
- a device (302) according to claim 13, and
- a material handling vehicle (304), MHV, the MHV (304) comprising the CAN bus (301) and a second CAN bus interface (310b), the second CAN bus interface (310b) being configured to connect the device (302) to the CAN bus (301) via the first CAN bus interface (310a) of the device (302),
- preferably:
the MHV (304) is configured to enter a service mode upon receiving, via the CAN bus (301), a data payload configured to trigger the MHV to enter the service mode, and wherein the device (302) is further configured to transmit said data payload to the CAN bus.
